# FASCICULE DE BREVET EUROPEEN

(11) **EP 1 566 046 B1**
(45) Date de publication et mention de la délivrance du brevet: **23.03.2011**
(21) Numéro de dépôt: 03789487.0
(22) Date de dépôt: 24.11.2003
(51) Int. Cl.: H04M 3/493

(54) **PROCEDE DE TRAITEMENT DE DONNEES AUDIO SUR UN RESEAU ET DISPOSITIF DE MISE EN OEUVRE DE CE PROCEDE**
VERFAHREN UND VORRICHTUNG ZUR VERARBEITUNG VON AUDIODATEN ÜBER EIN NETZWERK
METHOD FOR PROCESSING AUDIO DATA ON A NETWORK AND DEVICE THEREFOR

(30) Priorité: 29.11.2002 FR 0215026
(43) Date de publication de la demande: 24.08.2005
(73) Titulaire: Streamwide, F-75010 Paris (FR)
(72) Inventeur: GAICHIES Lilian, François, F-75013 Paris (FR); BEGLIN, Pascal, F-75007 Paris (FR); BOUTON, Thomas, F-94160 Saint-Mande (FR); NADHIR, Zakaria, F-75010 Paris (FR)
(74) Mandataire: Burbaud, Eric
(86) Numéro de dépôt international: PCT/FR2003/003472
(87) Numéro de publication internationale: WO 2004/051973

(56) Documents cités:
- EP-A- 1 175 074
- EP-A- 1 178 658
- WO-A-01/47218
- WO-A-01/52477
- WO-A-01/69427

## Description

La présente invention est relative aux procédés et aux programmes de traitement de données audio sur un réseau, ainsi qu'aux dispositifs de mise en oeuvre de ces procédés.

Plus particulièrement, l'invention concerne un procédé de traitement d'un flux de données comportant des données audio échangées sur un réseau entre un serveur et au moins un terminal téléphonique, ce flux de données correspondant à un appel téléphonique émis depuis ce terminal au cours duquel un utilisateur a produit au moins un évènement, ce procédé comprenant :
- une étape (a) consistant à extraire du flux de données correspondant à chaque appel téléphonique, des données audio correspondant à chaque évènement, et
- une étape (b) consistant à exécuter au moins une tâche relative aux données audio extraites et exécutable par une application logicielle.

De tels procédés de l'art antérieur permettent la communication entre un terminal téléphonique et un serveur via un réseau téléphonique commuté public ou privé, fixe ou mobile. Ils correspondent par exemple aux procédés bien connus sous l'acronyme IVR (acronyme de l'expression anglo-saxonne "Interactive Voice Response").

Ces procédés permettent, par exemple, la délivrance d'informations sous forme vocale à un utilisateur ou bien la commande d'opérations à distance à partir d'instructions données par cet utilisateur sous forme de données audio tels que des commandes vocales ou des sons générés lorsque ce dernier presse des touches du clavier de son terminal téléphonique (procédé DTMF, acronyme de l'expression anglo-saxonne "Dual Tone Multi Frequency").

Grâce à ce type de procédé, un utilisateur peut, par exemple, consulter le solde de comptes bancaires, des cours de bourse, consulter ou déposer des messages dans une boîte vocale, etc.

Lors d'un appel téléphonique un flux de données est généré à partir du terminal téléphonique. Ce flux de données comporte par exemple des données d'identification de l'utilisateur ainsi que des données correspondant aux sons émis par l'utilisateur, captés par le micro du terminal téléphonique ou générés par la pression de touches du terminal. Parmi ces sons, certains correspondent à des données audio caractéristiques d'événements particuliers.

Lorsque ces données audio sont identifiées par un serveur approprié, un programme exécute la tâche correspondante. Par exemple, la prononciation du mot "effacer" par l'utilisateur correspond à un évènement destiné à commander, dans un contexte donné, la tâche consistant à effacer un message dans une boîte vocale.

Dans ces procédés de l'art antérieur, notamment celui décrit dans le document EP 1 175 074, ou WO 01/52477, les programmes d'ordinateurs correspondant aux applications IVR sont développés dans des langages spécifiques tels que le TCL (acronyme de l'expression anglo-saxonne Tool Command Language), ou nécessitent l'utilisation d'interpréteurs tels que le VXML (acronyme de l'expression anglo-saxonne Voice extensible Markup Language), etc. Ces programmes sont tous exclusivement dédiés aux applications vocales, leur écriture s'effectue exclusivement dans l'un de ces langages et les bases de données compatibles avec ces programmes sont spécifiques à ces applications vocales.

La présente invention a notamment pour but d'ouvrir l'utilisation des procédés de communication de données audio de type IVR à de plus nombreuses sources.

Ce but est atteint par un procédé qui, outre les caractéristiques indiquées ci-dessus est caractérisé par le fait que l'application logicielle est destinée à interagir avec le réseau en utilisant un protocole de transmission de données non spécifiquement audio, et que le procédé comprend une étape (c) qui comprend l'introduction dans cette application logicielle, par des éléments de programme spécifiques au vocal adjoints à l'application logicielle par un sous module d'insertion, au moins d'une instruction relative aux données audio extraites et adaptée pour activer l'étape (b).

Grâce à ces dispositions, on peut utiliser, outre les applications vocales déjà existantes, des applications, ainsi que les bases de données compatibles avec ces applications, déjà développées pour permettre une interaction entre un serveur et un utilisateur autrement qu'en communiquant uniquement des données audio. Ainsi, il est possible d'utiliser des applications et des bases de données développées par exemple pour Internet, ce qui donne accès à de nombreuses sources de services et d'informations déjà existantes.

Ce procédé possède de plus l'avantage que toutes les applications déjà écrites dans le langage interprété pour Internet par exemple, sont immédiatement applicables au domaine du vocal, sans nécessiter d'être redéveloppées entièrement.

Ce procédé permet de plus d'intégrer toute nouvelle application d'IVR immédiatement dans tout réseau de télécommunications fonctionnant intégralement en mode paquet.

Dans des modes de réalisation préférés de l'invention, on peut éventuellement avoir recours en outre à l'une et/ou à l'autre des dispositions suivantes :
- l'application logicielle est écrite dans un langage, et les éléments de programme spécifiques au vocal adjoints à l'application logicielle sont écrits dans le même langage ;
- l'évènement est produit par l'appui par un utilisateur sur au moins une touche de terminal téléphonique ;
- l'évènement est produit par la diction d'une commande vocale prononcée par l'utilisateur, et l'étape (a) comprend une étape consistant à reconnaître la commande vocale prononcée, à l'aide d'une unité de reconnaissance vocale ;
- l'application logicielle est adaptée pour exécuter des tâches équivalentes en terme de services rendus à l'utilisateur, à la fois via un réseau Internet ou Intranet et via un réseau téléphonique ;
- le procédé comporte une étape (a') consistant à gérer l'évolution de l'appel téléphonique à partir de données non audio extraites du flux de données ;
- le procédé comporte l'étape (d) consistant à émettre sur le réseau, par un protocole de transmission de données audio sur réseau, des données audio de sortie en réponse à au moins un évènement produit par l'utilisateur.

Selon un autre aspect, l'invention concerne un système de traitement d'un flux de données comportant des données audio échangées sur un réseau entre un serveur et au moins un terminal téléphonique, le flux de données correspondant à un appel téléphonique émis depuis ce terminal au cours duquel un utilisateur a produit au moins un évènement, ce système comprenant :
- des moyens d'extraction de données audio correspondant à chaque évènement du flux de données correspondant à chaque appel téléphonique, et
- des moyens d'exécution pour exécuter au moins une tâche relative aux données audio extraites et exécutable par une application logicielle,
caractérisé par le fait que l'application logicielle est destinée à interagir avec le réseau en utilisant un protocole de transmission de données non spécifiquement audio, et que le système comprend des moyens d'introduction dans cette application logicielle, d'au moins une instruction relative aux données audio extraites et adaptée pour être lue et exécutée par les moyens d'exécution, les moyens d'introduction comprenant des éléments de programme spécifique au vocal adjoints à l'application logicielle.

On peut éventuellement avoir recours en outre à l'une et/ou à l'autre des dispositions suivantes :
- lesdits moyens d'extraction, d'exécution et d'introduction sont intégrés dans le serveur et ce serveur comprend au moins un ordinateur ;
- le serveur comporte des moyens de traitement de données numériques compris dans la liste suivants :
   - une unité de reconnaissance vocale pour reconnaître des commandes vocales prononcées par au moins un utilisateur,
   - une unité de contrôle d'appel pour extraire, du flux de données correspondant à chaque appel téléphonique, des données non audio correspondant à l'appel téléphonique,
   - une unité d'émission pour émettre sur le réseau, par un protocole de transmission de données audio sur réseau, des données audio de sortie correspondant à au moins un évènement,
   - une unité de transfert d'appels pour gérer les transferts d'appel d'au moins un utilisateur ,
   - une unité de lecture pour lire au moins une

instruction relative aux données audio extraites,
- une unité d'instructions de transfert d'appels pour effectuer un transfert d'appels, et
- une unité d'instructions de mise en conférence pour effectuer une mise en conférence d'au moins deux appels à l'aide des données non audio correspondant à chaque appel téléphonique ;
   - le système comprend en outre une base de données audio.

Selon un autre aspect, l'invention concerne un programme d'ordinateur pour le traitement d'un flux de données comportant des données audio échangées sur un réseau entre un serveur et au moins un terminal téléphonique, le flux de données correspondant à un appel téléphonique émis depuis ce terminal au cours duquel un utilisateur a produit au moins un évènement, ce programme d'ordinateur comprenant des portions de code de programme pour l'exécution des étapes d'un tel procédé lorsque ledit programme est exécuté par un ordinateur.

Selon un autre aspect, l'invention concerne un procédé de préparation d'un programme d'ordinateur pour exécuter au moins une tâche relative à des données audio extraites d'un flux de données comportant des données audio échangées sur un réseau entre un serveur et au moins un terminal téléphonique, le flux de données correspondant à un appel téléphonique émis depuis ce terminal au cours duquel un utilisateur a produit au moins un évènement, les données audio correspondant à cetévènement,
caractérisé en ce que ledit programme d'ordinateur est exécutable par une application logicielle destinée à interagir avec le réseau en utilisant un protocole de transmission de données non spécifiquement audio,
et en ce que le procédé comprend une étape dans laquelle on adjoint à l'application logicielle un sous-module d'insertion comprenant des éléments de programme spécifiques au vocal adaptés pour introduire dans l'application logicielle une instruction relative aux données audio extraites et adaptée pour activer l'exécution de ladite tâche.

D'autres aspects, buts et avantages de l'invention apparaîtront à la lecture de la description de plusieurs de ces modes de réalisations donnés à titre d'exemples non limitatifs.

L'invention sera également mieux comprise à l'aide des dessins sur lesquels :
- la figure 1 est un schéma global d'une application IVR mise en oeuvre conformément à l'invention,
- la figure 2 est un schéma de fonctionnement du système d'application selon l'invention,
- la figure 3 est un schéma de fonctionnement d'un deuxième mode de réalisation du système d'application selon l'invention, et
- la figure 4 est un exemple du fonctionnement de l'invention.

Sur ces différentes figures, les mêmes références désignent des éléments identiques ou similaires.

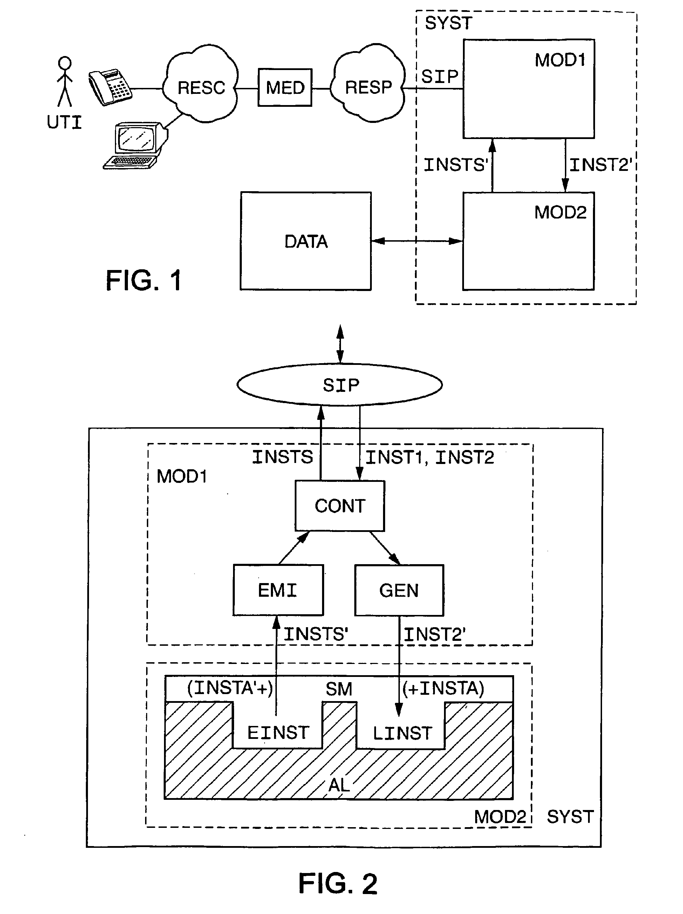

La figure 1 est un schéma de principe d'un exemple de service vocal interactif mis en oeuvre conformément à la présente invention.

Un utilisateur UTI ou un groupe d'utilisateurs peut accéder à un réseau téléphonique à commutation de circuits RESC via par exemple un téléphone, ou un ordinateur.

Ainsi, lors d'un appel téléphonique, l'utilisateur UTI produit des sons. Ces sons correspondent par exemple à sa voix ou à des signaux sonores spécifiques de la pression de touches sur le terminal téléphonique. Ces sons constituent des données audio. Parmi ces données audio, certaines sont représentatives d'évènements particuliers produits par l'utilisateur pour activer un service. Un tel évènement consiste par exemple à prononcer un mot particulier destiné à être reconnu ou à appuyer sur une touche spécifique du terminal téléphonique qu'il utilise.

A partir du terminal téléphonique, les données audio sont transmises, avec d'autres données de communication (par exemple des données d'identification de l'appel) avec lesquelles elles forment un flux de données, par le réseau téléphonique RESC à une passerelle de média MED qui permet de relier le réseau téléphonique à commutation de circuits à un réseau téléphonique à commutation de paquets RESP et vice versa. Des passerelles de média de ce type sont bien connues de l'Homme du Métier (voir par exemple le document EP 1 175 074). Le flux de données est alors transmis, jusqu'à un système d'application SYST, sur le réseau téléphonique à commutation de paquets RESP en utilisant un protocole de transport ou d'établissement d'appel sur ce type de réseau. Il s'agit par exemple du protocole SIP (acronyme de l'expression anglo-saxonne "Session Initiation Protocol") qui est un protocole IETF de voix (IETF est l'acronyme de l'expression anglo-saxonne "Internet Engineering Task Force").

Le système d'application SYST est géré par un fournisseur de services. Ces services correspondent à la consultation de bases de données (annuaires, données météorologiques, bourse, etc.) et/ou à la mise en oeuvre d'opérations (téléchargement de sonneries ou de logos pour téléphones mobiles, etc.).

Le flux de données correspond à un ensemble d'informations qui arrivent au fournisseur de services au niveau du système d'application SYST. Ces informations concernent à la fois les communications établies par un ou plusieurs utilisateurs du service, et un ensemble d'évènements produits par ce ou ces utilisateurs. Ces évènements peuvent être de tout type, comme par exemple d'appuyer sur une touche donnée d'un terminal téléphonique, ou de cliquer sur un lien donné d'une page Web présentée sur un moniteur d'ordinateur ou autre, pour naviguer dans un menu permettant d'obtenir une information ou d'effectuer une opération donnée.

Le système d'application comporte un premier module MOD1 qui sépare, dans le flux de données, les informations INST1 propres aux communications établies avec chaque utilisateur UTI, et les données audio utiles correspondant aux évènements susceptibles d'activer un ou des services accessibles par l'intermédiaire du serveur. Le premier module MOD1 gère les informations relatives aux communications et traduit, puis transmet, pour un utilisateur UTI donné, des instructions INST2', relatives aux données audio utiles à un deuxième module MOD2. Ce deuxième module MOD2 gère l'interactivité avec l'utilisateur UTI et émet des instructions de sortie INSTS' décrivant une information à fournir à l'utilisateur UTI, en fonction des instructions traduites INST2' qu'il a reçues. Cette information peut, par exemple, être relative à un message de succès/d'erreur sur la réussite d'une opération, ou relative à une information demandée par l'utilisateur.

Le premier module MOD1 reçoit alors ces instructions de sortie INSTS émises par le deuxième module MOD2, et émet selon le protocole de réseau SIP un ensemble de sons formant la réponse aux évènements produits par l'utilisateur UTI. Un dialogue se crée ainsi entre l'utilisateur UTI et le fournisseur de services, de sorte que non seulement plusieurs évènements peuvent être émis par l'utilisateur UTI auxquels une réponse adaptée peut être fournie par le fournisseur de services, mais de sorte aussi que les caractéristiques de la communication peuvent évoluer au cours du temps. Le premier module MOD1 est utilisé pour gérer l'évolution des caractéristiques de la communication, tandis que le deuxième module MOD2 est utilisé pour gérer la réponse aux diverses requêtes de l'utilisateur UTI ou du groupe d'utilisateurs.

Le service consiste par exemple à échanger avec une base de données DATA.

La communication entre le réseau téléphonique à commutation de paquets et le premier module MOD1, ainsi qu'entre les premier MOD1 et deuxième MOD2, s'effectue par exemple selon le protocole SIP. La gestion de l'interactivité au sein du deuxième module MOD2 s'effectue, par exemple, dans un langage PHP (de l'expression anglo-saxonne "Hypertext Preprocessor") javascript ou autre.

Un exemple de système d'application SYST selon l'invention est décrit sur la figure 2. Dans ce système d'application, les évènements correspondent par exemple à des sons générés par la pression de touches d'un terminal téléphonique. Le flux de données parvient du réseau téléphonique à commutation de paquets au premier module MOD1. Le premier module MOD1 comporte essentiellement un contrôleur d'appel CONT et un générateur d'instructions GEN.

Plus particulièrement dans le premier module MOD1, le flux de données est transmis au contrôleur d'appel CONT. Ce contrôleur d'appel CONT gère l'entrée et la sortie des données échangées entre le réseau téléphonique à commutation de paquets et le premier module MOD1, selon le protocole SIP. Il traite les fonctions d'établissement et de supervision de l'appel vocal. Il gère l'identification unique de l'appel dans le système d'application, et toutes les fonctions du protocole SIP. Pour un utilisateur donné, il transfère au générateur d'instructions GEN les instructions INST2 concernant les évènements. Ce générateur d'instructions GEN détecte qu'en bout de ligne, l'utilisateur UTI a produit un évènement donné, tel qu'appuyer sur une touche "*" de son téléphone, et traduit cette information correspondant à l'instruction INST2 en une instruction INST2' qu'il transmet au deuxième module MOD2.

Ce deuxième module MOD2 comporte principalement une application logicielle AL écrite dans un langage interprété ou compilé de haut niveau. Cette application logicielle AL peut avoir été développée pour fournir un service via le réseau Internet et n'est donc pas nécessairement adaptée à recevoir des instructions propres au vocal. L'application logicielle est généralement destinée à interagir avec le réseau RESP en utilisant un protocole de transmission de données non spécifiquement audio, par exemple le protocole IP (acronyme de l'expression anglo-saxonne "Internet Protocol"). C'est pourquoi ce deuxième module MOD2 contient de plus, un sous module d'insertion SM. Le module d'insertion SM ajoute si nécessaire des instructions additionnelles INSTA aux instructions INST2' pour pouvoir utiliser dans le code du langage de haut niveau les instructions INST2 qui sont spécifiques au domaine vocal.

Grâce au sous module d'insertion SM, une unité de lecture d'instructions LINST de l'application logicielle est capable de comprendre l'instruction INST2' émise par le générateur d'instructions GEN, et peut ainsi activer des tâches programmées dans le langage de haut niveau développé pour des applications non spécifiques au vocal.

Plus particulièrement, le sous module d'insertion SM se superpose à l'application logicielle AL, et lui adjoint des éléments de programme spécifiques au vocal écrit dans le code de langage de haut niveau et capables de décoder les instructions INST2' traduites par le générateur d'événements GEN, par exemple par des lignes de commande comprises entre des séparateurs de type <VOCAL> et </VOCAL>. Cet élément peut de plus être séparé en plusieurs parties réparties sur plusieurs ordinateurs du système d'application, ou mettre en jeu des fonctions système pour se substituer partiellement à lui.

Ainsi, selon un exemple de fonctionnement de l'invention, une application logicielle AL est préalablement programmée, par exemple en langage PHP. Le langage de programmation est recompilé afin de permettre d'utiliser des éléments de programme spécifiques au vocal, tel que par exemple une commande at_prompt(). Une telle commande permet la réception d'un signal DTMF.

Par exemple, dans un cas donné, l'application logicielle préexistante faisait afficher sur l'écran d'ordinateur d'un utilisateur distant un menu dans lequel l'utilisateur pouvait accéder à l'une parmi plusieurs fonctions de l'application logicielle selon un caractère tapé au clavier. En se fondant sur l'application logicielle préexistante, un développeur peut adjoindre l'élément de programme suivant à l'application logicielle : la commande $touche=at_prompt(). La variable « touche » (l'instruction INST2') prendra la valeur de la touche pressée par l'utilisateur. On accédera à la fonction correspondante de l'application logicielle selon la valeur de la variable « touche » de même qu'on y accédait précédemment quand l'utilisateur appuyait sur la touche correspondante de son clavier. Il n'est ainsi pas nécessaire de redévelopper la fonction en question spécifiquement pour l'application IVR, car on peut utiliser la fonction préexistante de l'application logicielle.

En outre, le système peut détecter si l'utilisateur accède à l'application logicielle par téléphone ou autrement, auquel cas la variable « touche » prend soit la valeur fournie par clavier (cet élément de programme préexistant dans l'application logicielle) soit la valeur fournie par téléphone (cet élément de programme étant adjoint dans le sous-module SM).

L'application logicielle AL peut ainsi traiter ces instructions INST2' et fournir la réponse à l'évènement produit par l'utilisateur UTI.

L'application logicielle AL en langage de haut niveau n'étant pas nécessairement développée pour fournir une information spécifique au domaine du vocal, il est éventuellement nécessaire de repasser par le sous module d'insertion SM pour fournir via une unité d'envoi d'instructions d'émission de sons EINST, une instruction INSTS' qui est alors transmise à une unité d'émission de sons EMI, dans le premier module MOD1. Eventuellement, des instructions additionnelles INSTA' sont ajoutées aux instructions INSTS'. L'unité d'émission de sons EMI peut, en fonction des instructions INSTS' aller chercher dans une base de données (non représentée) des éléments de sons, et les encoder afin de transmettre au contrôleur d'appel CONT les éléments de sons encodés à transmettre sur le réseau téléphonique. Le contrôleur d'appel CONT récupère ces éléments de sons codés, et en fonction de l'identité de l'utilisateur UTI, transmet à cet utilisateur les informations INSTS relatives à l'évènement qu'il avait initialement produit.

Ainsi, dans un exemple, l'application logicielle préexistante faisait afficher sur l'écran d'ordinateur d'un utilisateur distant du réseau un message de confirmation du type « Votre message est enregistré ». Le langage de programmation a été recompilé pour que le développeur puisse adjoindre à l'application logicielle des éléments de programme spécifiques au vocal, tel que par exemple une commande at_play(fichier_son.al). Une telle commande permet de commander la lecture d'un fichier son de type courant. En se fondant sur l'application logicielle préexistante, un développeur peut adjoindre à l'application logicielle, à l'endroit voulu, un élément de programme comprenant la commande at_play(confirmation.al) où le fichier son confirmation.al cite « Votre message est enregistré ».

Bien d'autres commandes peuvent être adjointes à l'application logicielle dans le cadre de l'invention. On peut en particulier prévoir que, quand un utilisateur distant raccroche son téléphone, on mette à jour des données relatives à cet utilisateur dans une base de données.

A l'aide d'un programme exécutable, par exemple développé en C++, le langage de programmation dans lequel l'application logicielle est développée est modifié pour que le langage de programmation puisse inclure des commandes additionelles telles la commande at_play(fichier.al) ou la commande at_prompt() ou autres. A partir de l'application logicielle préexistante, une application IVR est alors facilement construite, en adjoignant un sous-module SM contenant entre autres les éléments de code de programme adjoints spécifiques au vocal.

La figure 2 représente un exemple simple de système d'application SYST selon l'invention, permettant de renvoyer un ou plusieurs sons à un ou plusieurs utilisateurs UTI en réponse à un évènement produit par le ou les utilisateur(s) UTI.

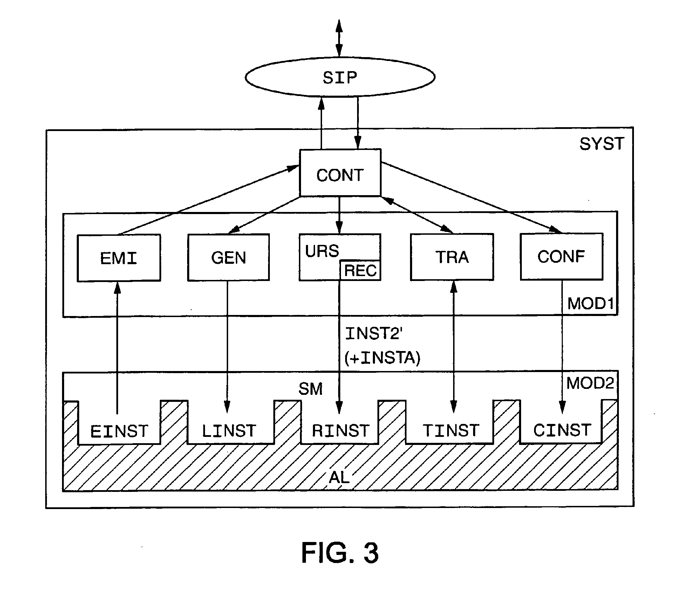

Le système d'application selon l'invention peut mettre en oeuvre un ensemble d'autres fonctions, telles que celles représentées sur la figure 3.

Comme représenté sur la figure 3, en plus des éléments du système d'application SYST déjà décrits, le système d'application SYST est tout à fait adapté pour permettre à l'utilisateur UTI de générer des évènements non plus exclusivement produits par des pressions sur des touches de téléphone. Il peut également traiter des données correspondant par exemple à des sélections à l'aide d'une souris sur une page d'un document formaté en HTML (acronyme de l'expression anglo-saxonne Hyper Text Markup Language) affiché sur un écran d'ordinateur ou des sons purement vocaux émis par cet utilisateur UTI.

Dans le cas d'instructions vocales, les sons sont captés par exemple sur le terminal téléphonique de l'utilisateur UTI, puis transmis par le réseau téléphonique à une unité de réception de sons URS intégrée au premier module MOD1. Les sons émis par un utilisateur UTI, sont par exemple des mots prononcés par cet utilisateur UTI. L'unité de réception de sons URS peut alors par exemple inclure une unité de reconnaissance vocale REC capable de reconnaître les mots prononcés par l'utilisateur UTI et, en fonction du résultat de cette reconnaissance, de transmettre une instruction INST2' à une unité d'instructions d'enregistrement RINST. Eventuellement, à l'instruction INST2' sont associées des instructions additionnelles INSTA générées par le sous module d'insertion SM, pour que l'unité d'instruction d'enregistrement RINST soit capable de lire cette instruction INST2' via son sous module d'insertion SM.

De manière analogue, ce système d'application SYST peut également gérer des fonctions telles que des transferts d'appels, à l'aide d'une unité de transfert d'appel TRA et d'une unité d'instructions de transferts TINST. Ces fonctions sont mises en oeuvre à partir d'instructions analogues aux instructions INST2' et INSTA déjà décrites. Il s'agit d'une option qui permet de transmettre au contrôleur d'appel CONT des informations permettant de gérer un transfert d'appel et supportées par le protocole de voix sur le réseau, SIP par exemple.

Le système d'application selon l'exemple décrit ici permet également, et de la même manière, de mettre en conférence les appels de plusieurs utilisateurs UTI, à leur requête, à l'aide d'une unité de mise en conférence CONF, et d'une unité d'instructions de conférence CINST.

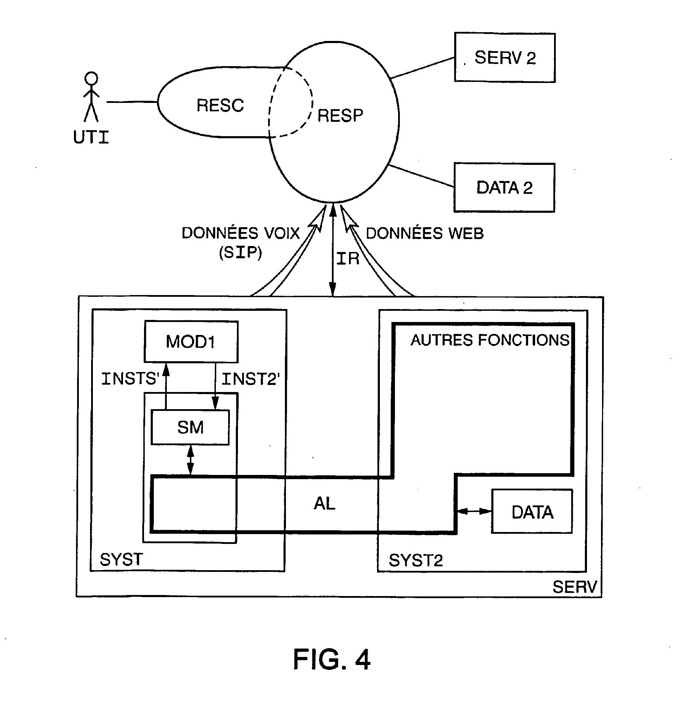

Une alternative à l'exemple de fonctionnement de l'invention décrit plus haut est décrite sur la figure 4. Un utilisateur ou un groupe d'utilisateurs UTI cherche à accéder à un service, tel que l'un des services précités, fourni par un fournisseur de services via un réseau RESC. L'application logicielle AL capable de répondre à ce service est disposée sur un serveur distant SERV, par exemple à base de processeurs INTEL. Ce serveur fonctionne sous un système d'exploitation WINDOWS, UNIX ou LINUX et comprend, outre le système d'application SYST décrit ci-dessus, un système SYST2 commandant d'autres fonctions du serveur SERV. Le service auquel l'utilisateur UTI souhaite accéder peut être fourni, sous un format non vocal, par exemple en langage PHP par l'application logicielle AL.

Un évènement généré par un utilisateur UTI, par exemple à l'aide de son combiné téléphonique, est transmis, comme expliqué précédemment, via le réseau téléphonique commuté RESC, à une passerelle de media MED et un réseau à commutation de paquets RESP jusqu'au serveur SERV hébergeant l'application. Dans le présent exemple, le réseau à commutation de paquets RESP est par exemple le réseau Internet. Le serveur SERV est relié au réseau RESP par une interface réseau Ethernet IR classique.

Le flux de données arrivant est, comme explicité précédemment, traité par un premier module MOD1 qui gère tous les aspects relatifs à la communication, et transmet, au deuxième module MOD2, des instructions INST2' relatives aux évènements générés par l'utilisateur à l'application logicielle AL via le sous module SM, qui transforme ces instructions INST2', par exemple grâce à un logiciel exécutable en C++, en langage PHP 4.2.2 recompilé afin qu'elles puissent être intégrées dans l'application logicielle AL qui, elle, est en langage PHP. L'application logicielle AL, en réponse aux instructions INST2' effectue des tâches appropriées. En particulier, une réponse vocale peut être reconstituée à partir de données qui sont stockées dans la base de données DATA. L'application logicielle AL peut également produire d'autres fonctions notamment en interaction avec d'autres serveurs distants SERV2 et/ou bases de données distantes DATA2 accessibles par Internet, par exemple.

Le deuxième module MOD2 est capable de transmettre en retour au premier module MOD1 des instructions de sortie INSTS'. Le premier module émet directement sur le réseau à commutation de paquets RESP, à l'aide du protocole de voix sur réseau SIP, sous forme de réponse vocale, des informations relatives aux évènements générés par l'utilisateur UTI.

En outre, en fonction du flux de données générées par l'utilisateur UTI, le système SYST2 peut par exemple communiquer des données propres à l'utilisateur vers la base de données distante DATA2, via le réseau RESP.

## Revendications

1. Procédé de traitement d'un flux de données comportant des données audio (INST2) échangées sur un réseau entre un serveur (SERV) et au moins un terminal téléphonique, le flux de données correspondant à un appel téléphonique émis depuis ce terminal au cours duquel un utilisateur (UTI) a produit au moins un évènement, ce procédé comprenant :
- une étape a) consistant à extraire du flux de données correspondant à chaque appel téléphonique, des données audio (INST2) correspondant à chaque évènement, et
- une étape b) consistant à exécuter au moins une tâche relative aux données audio (INST2) extraites et exécutable par une application logicielle (AL),
**caractérisé par le fait que** l'application logicielle (AL) est programmée dans un langage développé pour des applications non spécifiques au vocal, et est destinée à interagir avec le réseau en utilisant un protocole de transmission de données non spécifiquement audio, et que le procédé comprend une étape c) qui comprend l'introduction dans cette application logicielle (AL), par des éléments de programme spécifiques au vocal écrits dans ledit langage, et adjoints à l'application logicielle par un sous module d'insertion, au moins d'une instruction (INST2') relative aux données audio INST2) extraites et adaptée pour activer l'étape (b).

2. Procédé selon la revendication 1, dans lequel l'application logicielle (AL) est écrite dans un langage, et dans lequel les éléments de programme spécifiques au vocal adjoints à l'application logicielle sont écrits dans le même langage.

3. Procédé selon la revendication 1 ou la revendication 2, dans lequel l'évènement est produit par l'appui par l'utilisateur (UTI) sur au moins une touche de terminal téléphonique.

4. Procédé selon l'une des revendications précédentes dans lequel l'événement est produit par la diction d'une commande vocale prononcée par l'utilisateur (UTI), et l'étape a) comprend une étape consistant à reconnaître la commande vocale prononcée, à l'aide d'une unité de reconnaissance vocale (REC).

5. Procédé selon l'une des revendications précédentes, dans lequel l'application logicielle est adaptée pour exécuter des tâches équivalentes en terme de services rendus à l'utilisateur (UTI), à la fois via un réseau Internet ou Intranet (RESP) et via un réseau téléphonique (RESC).

6. Procédé selon l'une des revendications précédentes, comprenant en outre une étape a') consistant à gérer l'évolution de l'appel téléphonique à partir de données non audio extraites du flux de données.

7. Procédé selon l'une des revendications précédentes, comprenant en outre l'étape d) consistant à émettre sur le réseau, par un protocole de transmission de données audio sur réseau, des données audio (INSTS) de sortie en réponse à au moins un évènement produit par l'utilisateur (UTI).

8. Procédé selon l'une quelconque des revendications précédentes, dans lequel l'application logicielle est programmée en langage PHP ou Javascript.

9. Système de traitement d'un flux de données comportant des données audio (INST2) échangées sur un réseau entre un serveur (SERV) et au moins un terminal téléphonique, le flux de données correspondant à un appel téléphonique émis depuis ce terminal au cours duquel un utilisateur (UTI) a produit, au moins un évènement, ce système comprenant :
- des moyens d'extraction (MOD1) de données audio (INST2) correspondant à chaque évènement du flux de données correspondant à chaque appel téléphonique, et
- des moyens d'exécution (MOD2) pour exécuter au moins une tâche relative aux données audio (INST2) extraites et exécutable par une application logicielle (AL), **caractérisé par le fait que** l'application logicielle (AL) est programmée dans un langage développé pour des applications non spécifiques au vocal, et est destinée à interagir avec le réseau en utilisant un protocole de transmission de données non spécifiquement audio, et que le dispositif comprend des moyens d'introduction (SM) dans cette application logicielle (AL), d'au moins une instruction (INST2') relative aux données audio (INST2) extraites et adaptée pour être lue et exécutée par les moyens d'exécution, les moyens d'introduction (SM) comprenant des éléments de programme spécifiques au vocal écrits dans ledit langage, et adjoints à l'application logicielle.

10. Système selon la revendication 9, dans lequel lesdits moyens d'extraction (MOD1), d'exécution (MOD2) et d'introduction (SM) sont intégrés dans le serveur (SERV) et que ce serveur (SERV) comprend au moins un ordinateur.

11. Système selon la revendication 9 ou 10, dans lequel le serveur (SERV) comporte des moyens de traitement de données numériques compris dans la liste suivante :
- une unité de reconnaissance vocale (REC) pour reconnaître des commandes vocales prononcées par au moins un utilisateur (UTI),
- une unité de contrôle d'appel (CONT) pour extraire, du flux de données correspondant à chaque appel téléphonique, des données non audio correspondant à l'appel téléphonique,
- une unité d'émission (EMI) pour émettre sur le réseau, par un protocole de transmission de données audio sur réseau, des données audio de sortie (INSTS) correspondant à au moins un évènement,
- une unité de transfert d'appels (TRA) pour gérer les transferts d'appel d'au moins un utilisateur,
- une unité de lecture (LINST) pour lire au moins une instruction relative aux données audio extraites (INST2'),
- une unité d'instructions de transfert d'appels (TINST) pour effectuer un transfert d'appels, et
- une unité d'instructions de mise en conférence (CINST) pour effectuer une mise en conférence d'au moins deux appels à l'aide des données non audio correspondant à chaque appel téléphonique.

12. Système selon l'une des revendications 9 à 11 comprenant en outre une base de données audio (DATA).

13. Programme d'ordinateur pour le traitement d'un flux de données comportant des données audio (INST2) échangées sur un réseau entre un serveur (SERV) et au moins un terminal téléphonique, le flux de données correspondant à un appel téléphonique émis depuis ce terminal au cours duquel un utilisateur (UTI) a produit au moins un évènement, ce programme d'ordinateur comprenant des portions de code de programme pour l'exécution des étapes du procédé selon l'une quelconque des revendications 1 à 8 lorsque ledit programme est exécuté par un ordinateur.

14. Procédé de préparation d'un programme d'ordinateur pour exécuter au moins une tâche relative à des données audio (INST2) extraites d'un flux de données comportant des données audio (INST2) échangées sur un réseau entre un serveur (SERV) et au moins un terminal téléphonique, le flux de données correspondant à un appel téléphonique émis depuis ce terminal au cours duquel un utilisateur (UTI) a produit au moins un évènement, les données audio (INST2) correspondant à cet évènement,
**caractérisé en ce que** ladite tâche est exécutable par une application logicielle (AL) programmée dans un langage développé pour des applications non spécifiques au vocal et est destinée à interagir avec le réseau en utilisant un protocole de transmission de données non spécifiquement audio,
et **en ce que** le procédé comprend une étape dans laquelle on adjoint à l'application logicielle (AL) un sous-module d'insertion (SM) comprenant des éléments de programme spécifiques au vocal, écrits dans ledit langage, et adaptés pour introduire dans l'application logicielle (AL) une instruction (INST2') relative aux données audio (INST2) extraites et adaptée pour activer l'exécution de ladite tâche.

15. Procédé selon la revendication 14, dans lequel l'application logicielle est programmée en langage PHP ou Javascript.

## Claims

1. A method of processing a stream of data comprising audio data (INST2) exchanged over a network between a server (SERV) and at least one telephone terminal, the stream of data corresponding to a telephone call from the terminal during which a user (UTI) has produced at least one event, the method comprising:
a step a) consisting in extracting from the data stream corresponding to each telephone call audio data (INST2) corresponding to each event; and
a step b) consisting in executing at least one task relating to the extracted audio data (INST2) and executable by a software application (AL);
the method being **characterized by** the facts that the software application (AL) is programmed in a language designed for not-specifically vocal applications, and is designed to interact with the network by using a data transmission protocol that is not specific to audio, and that the method includes a step c) which comprises inserting into said software application (AL), through program elements that are specific to voice and added to the software application via an insertion sub-module, at least one instruction (INST2') relating to the extracted audio data (INST2) and adapted to activate step b).

2. A method according to claim 1, in which the software application (AL) is written in a language, and in which the program elements specific to voice that are added to the software application are written in the same language.

3. A method according to claim 1 or claim 2, in which the event is produced by the user (UTI) pressing on at least one key of the telephone terminal.

4. A method according to any preceding claim, in which the event is produced by the user (UTI) uttering a voice command, and step a) includes a step consisting in recognizing the uttered voice command by means of a voice recognition unit (REC).

5. A method according to any preceding claim, in which the software application is adapted to execute tasks that are equivalent in terms of services given to the user (UTI) whether implemented over an Internet or Intranet network (RESP) or over a telephone network (RESC).

6. A method according to any preceding claim, further including a step a') consisting in managing changes in the telephone call on the basis of non-audio data extracted from the data stream.

7. A method according to any preceding claim, further including a step d) consisting in using a protocol for transmitting audio data over a network to transmit output audio data (INSTS) over the network as delivered in response to at least one event produced by the user (UTI).

8. Method according to any of the preceding claims, wherein the software application is programmed in PHP or javascript language.

9. A system for processing a data stream comprising audio data (INST2) exchanged over a network between a server (SERV) and at least one telephone terminal, the data stream corresponding to a telephone call from said terminal during which a user (UTI) has produced at least one event, the system comprising:
extraction means (MOD1) for extracting audio data (INST2) corresponding to each event from the data stream corresponding to each telephone call; and
execution means (MOD2) for executing at least one task relating to the extracted audio data (INST2) and executable by a software application (AL);
the system being **characterized by** the facts that the software application (AL) is programmed in a language designed for not-specifically vocal applications, and is designed to interact with the network by using a data transmission protocol that is not specifically audio, and that the system includes insertion means (SM) for inserting into said software application (AL) at least one instruction (INST2') relating to the extracted audio data (INST2) and adapted to be read and executed by the execution means, the introduction means (SM) comprising program elements that are specific to voice and added to the software application.

10. A system according to claim 9, in which said extraction means (MOD1), execution means (MOD2), and introduction means (SM), are integrated in the server (SERV), and in that the server (SERV) comprises at least one computer.

11. A system according to claim 9 or claim 10, in which the server (SERV) includes digital processor means taken from the following list:
a voice recognition unit (REC) for recognizing voice commands uttered by at least one user (UTI);
a call control unit (CONT) for extracting from the data stream corresponding to each telephone call, non-audio data corresponding to the telephone call;
a sound transmit unit (EMI) for using a network protocol for audio data transmission to transmit over the network output audio data (INSTS) corresponding to at least one event;
a call transfer unit (TRA) for managing call transfers for at least one user;
a read unit (LINST) for reading at least one instruction relating to the extracted audio data (INST2');
a call transfer instruction unit (TINST) for implementing a call transfer; and
a conference setup instruction unit (CINST) for setting up a conference of at least two calls using non-audio data corresponding to each telephone call.

12. A system according to any one of claims 9 to 11, further including an audio database (DATA).

13. A computer program for processing a data stream comprising audio data (INST2) exchanged over a network between a server (SERV) and at least one telephone terminal, the data stream corresponding to a telephone call from said terminal during which a user (UTI) has produced at least one event, the computer program including program code portions for executing the steps of the method according to any one of claims 1 to 8 when said program is executed by a computer.

14. A method of preparing a computer program for executing at least one task relating to audio data (INST2) extracted from a data stream comprising audio data (INST2) exchanged over a network between a server (SERV) and at least one telephone terminal, the data stream corresponding to a telephone call from said terminal during which a user (UTI) has produced at least one event, the audio data (INST2) corresponding to said event;
the method being **characterized in that** said task is executable by a software application (AL) programmed in a language designed for not-specifically vocal applications, and is for interacting with the network using a data transmission protocol that is not specifically an audio protocol; and
**in that** the method includes a step in which an insertion sub-module (SM) is added to the software application (AL), the sub-module comprising program elements that are specific to voice and adapted to introduce into the software application (AL) an instruction (INST2') relating to the extracted audio data (INST2) and adapted to activate execution of said task.

15. A method according to claim 14, wherein the software application is programmed in PHP or javascript language.

## Patentansprüche

1. Verfahren zur Verarbeitung eines Datenstroms, der Audiodaten (INST2) aufweist, die in einem Netzwerk zwischen einem Server (SERV) und mindestens einem Telefonendgerät ausgetauscht werden, wobei der Datenstrom einem von diesem Endgerät gesendeten Telefonanruf entspricht, während dem ein Benutzer (UTI) mindestens ein Ereignis erzeugt hat, wobei dieses Verfahren enthält:
- einen Schritt a), der darin besteht, aus dem jedem Telefonanruf entsprechenden Datenstrom jedem Ereignis entsprechende Audiodaten (INST2) zu entnehmen, und
- einen Schritt b), der darin besteht, mindestens eine Task auszuführen, die sich auf die entnommenen Audiodaten (INST2) bezieht und von einer Softwareanwendung (AL) ausgeführt werden kann,
**dadurch gekennzeichnet, dass** die Softwareanwendung (AL) in einer Sprache programmiert ist, die für nicht sprachspezifische Anwendungen entwickelt wurde, und dazu bestimmt ist, mit dem Netzwerk unter Verwendung eines Übertragungsprotokolls von Daten, die nicht spezifisch Audiodaten sind, zu interagieren, und dass das Verfahren einen Schritt c) enthält, der die Einführung in diese Softwareanwendung (AL) durch in dieser Sprache geschriebene und der Softwareanwendung durch ein Einführungs-Teilmodul beigeordnete sprachspezifische Programmelemente mindestens einer Anweisung (INST2') enthält, die sich auf die entnommenen Audiodaten (INST2) bezieht und zur Aktivierung des Schritts (b) geeignet ist.

2. Verfahren nach Anspruch 1, wobei die Softwareanwendung (AL) in einer Sprache geschrieben ist und wobei die der Softwareanwendung beigeordneten sprachspezifischen Programmelemente in der gleichen Sprache geschrieben sind.

3. Verfahren nach Anspruch 1 oder 2, wobei das Ereignis durch Drücken des Benutzers (UTI) auf mindestens eine Taste des Telefonendgeräts erzeugt wird.

4. Verfahren nach einem der vorhergehenden Ansprüche, wobei das Ereignis durch die Diktion eines vom Benutzer (UTI) ausgesprochenen Sprachbefehls erzeugt wird, und der Schritt a) einen Schritt enthält, der darin besteht, den ausgesprochenen Sprachbefehl mit Hilfe einer Spracherkennungseinheit (REC) zu erkennen.

5. Verfahren nach einem der vorhergehenden Ansprüche, wobei die Softwareanwendung geeignet ist, um äquivalente Tasks im Sinne von für den Benutzer (UTI) geleisteten Diensten gleichzeitig über ein Internet oder Intranet (RESP) und über ein Telefonnetz (RESC) auszuführen.

6. Verfahren nach einem der vorhergehenden Ansprüche, das außerdem einen Schritt a') enthält, der darin besteht, die Entwicklung des Telefonanrufs ausgehend von aus dem Datenstrom entnommenen Daten, die keine Audiodaten sind, zu verwalten.

7. Verfahren nach einem der vorhergehenden Ansprüche, das außerdem den Schritt d) enthält, der darin besteht, im Netzwerk durch ein Übertragungsprotokoll von Audiodaten im Netzwerk Ausgangs-Audiodaten (INSTS) als Antwort auf mindestens ein vom Benutzer (UTI) erzeugtes Ereignis zu senden.

8. Verfahren nach einem der vorhergehenden Ansprüche, wobei die Softwareanwendung in der Sprache PHP oder JavaScript programmiert ist.

9. System zur Verarbeitung eines Datenstroms, der Audiodaten (INST2) aufweist, die in einem Netzwerk zwischen einem Server (SERV) und mindestens einem Telefonendgerät ausgetauscht werden, wobei der Datenstrom einem von diesem Endgerät gesendeten Telefonanruf entspricht, während dem ein Benutzer (UTI) mindestens ein Ereignis erzeugt hat, wobei dieses System enthält:
- Entnahmeeinrichtungen (MOD1) von Audiodaten (INST2), die jedem Ereignis des jedem Telefonanruf entsprechenden Datenstroms entsprechen, und
- Ausführungseinrichtungen (MOD2), um mindestens eine Task auszuführen, die sich auf die entnommenen Audiodaten (INST2) bezieht und von einer Softwareanwendung (AL) ausgeführt werden kann,
**dadurch gekennzeichnet, dass** die Softwareanwendung (AL) in einer Sprache programmiert ist, die für nicht sprachspezifische Anwendungen entwickelt wurde, und dazu bestimmt ist, unter Verwendung eines Übertragungsprotokolls von Daten, die nicht spezifisch Audiodaten sind, mit dem Netzwerk zu interagieren, und dass das System Einrichtungen (SM) zur Einführung in diese Softwareanwendung (AL) von mindestens einer Anweisung (INST2') enthält, die sich auf die entnommenen Audiodaten (INST2) bezieht und geeignet ist, von den Ausführungseinrichtungen gelesen und ausgeführt werden zu können, wobei die Einführungseinrichtungen (SM) sprachspezifische Programmelemente enthalten, die in der Sprache geschrieben und der Softwareanwendung beigeordnet sind.

10. System nach Anspruch 9, wobei die Entnahme- (MOD1), Ausführungs-(MOD2) und Einführungseinrichtungen (SM) in den Server (SERV) integriert sind und dieser Server (SERV) mindestens einen Computer enthält.

11. System nach Anspruch 9 oder 10, wobei der Server (SERV) Einrichtungen zur Verarbeitung digitaler Daten aufweist, die in der folgenden Liste enthalten sind:
- eine Spracherkennungseinheit (REC), um von mindestens einem Benutzer (UTI) ausgesprochene Sprachbefehle zu erkennen,
- eine Anrufkontrolleinheit (CONT), um aus dem jedem Telefonanruf entsprechenden Datenstrom dem Telefonanruf entsprechende Daten zu entnehmen, die keine Audiodaten sind,
- eine Sendeeinheit (EMI), um im Netzwerk durch ein Übertragungsprotokoll von Audiodaten im Netzwerk Ausgangs-Audiodaten (INSTS) zu senden, die mindestens einem Ereignis entsprechen,
- eine Rufweiterleitungseinheit (TRA), um die Rufweiterleitungen mindestens eines Benutzers zu verwalten,
- eine Leseeinheit (LINST), um mindestens eine Anweisung bezüglich der entnommenen Audiodaten (INST2') zu lesen,
- eine Einheit von Rufweiterleitungsanweisungen (TINST), um eine Rufweiterleitung auszuführen, und
- eine Einheit von Konferenzschaltungsanweisungen (CINST), um eine Konferenzschaltung von mindestens zwei Anrufen mit Hilfe von jedem Telefonanruf entsprechenden Daten, die keine Audiodaten sind, auszuführen.

12. System nach einem der Ansprüche 9 bis 11, das außerdem eine Bank von Audiodaten (DATA) enthält.

13. Computerprogramm zur Verarbeitung eines Datenstroms, der Audiodaten (INST2) aufweist, die in einem Netzwerk zwischen einem Server (SERV) und mindestens einem Telefonendgerät ausgetauscht werden, wobei der Datenstrom einem von diesem Endgerät gesendeten Telefonanruf entspricht, während dem ein Benutzer (UTI) mindestens ein Ereignis erzeugt hat, wobei dieses Computerprogramm Programmcodeabschnitte zur Ausführung der Schritte des Verfahrens nach einem der Ansprüche 1 bis 8 enthält, wenn das Programm von einem Computer ausgeführt wird.

14. Verfahren zur Bereitstellung eines Computerprogramms zur Ausführung mindestens einer Task bezüglich von Audiodaten (INST2), die aus einem Datenstrom entnommen werden, der Audiodaten (INST2) aufweist, die in einem Netzwerk zwischen einem Server (SERV) und mindestens einem Telefonendgerät ausgetauscht werden, wobei der Datenstrom einem von diesem Endgerät gesendeten Telefonanruf entspricht, während dem ein Benutzer (UTI) mindestens ein Ereignis erzeugt hat, wobei die Audiodaten (INST2) diesem Ereignis entsprechen,
**dadurch gekennzeichnet, dass** die Task von einer Softwareanwendung (AL) ausgeführt werden kann, die in einer Sprache programmiert ist, die für nicht sprachspezifische Anwendungen entwickelt wurde, und dazu bestimmt ist, mit dem Netzwerk unter Verwendung eines Übertragungsprotokolls von Daten, die nicht spezifisch Audiodaten sind, zu interagieren,
und dass das Verfahren einen Schritt enthält, in dem der Softwareanwendung (AL) ein Einfügungs-Teilmodul (SM) beigeordnet wird, das sprachspezifische Programmelemente enthält, die in der Sprache geschrieben und geeignet sind, um in die Softwareanwendung (AL) eine Anweisung (INST2') einzufügen, die sich auf die entnommenen Audiodaten (INST2) bezieht und geeignet ist, um die Ausführung der Task zu aktivieren.

15. Verfahren nach Anspruch 14, wobei die Softwareanwendung in der Sprache PHP oder JavaScript programmiert ist.
